# FASCICULE DE BREVET EUROPEEN

(11) **EP 2 940 815 B1**
(45) Date de publication et mention de la délivrance du brevet: **16.01.2019**
(21) Numéro de dépôt: 15305579.3
(22) Date de dépôt: 17.04.2015
(51) Int. Cl.: H02G 3/08, H02G 3/12

(54) **BOÎTE ÉLECTRIQUE ÉTANCHE À ENCASTRER DANS UNE PAROI**
DICHTER ELEKTRISCHER SCHALTSCHRANK ZUM EINBAU IN EINE WAND
SEALED ELECTRICAL BOX FOR INSTALLATION IN A WALL

(30) Priorité: 30.04.2014 FR 1453975
(43) Date de publication de la demande: 04.11.2015
(73) Titulaire: Legrand France, 87000 Limoges (FR); Legrand SNC, 87000 Limoges (FR)
(72) Inventeur: Delmas, Simon, 87000 Limoges (FR); Longeville, Jérome, 87350 Panazol (FR)
(74) Mandataire: Jacobacci Coralis Harle

(56) Documents cités:
- DE-U1- 7 631 667
- DE-U1-202005 000 545
- FR-A1- 2 339 318
- FR-A1- 2 863 413
- US-A- 4 296 870

## Description

### DOMAINE TECHNIQUE AUQUEL SE RAPPORTE L'INVENTION

La présente invention concerne de manière générale l'installation d'appareillages électriques en position encastrée dans des parois.

Elle concerne plus particulièrement une boîte électrique à encastrer dans une paroi, comportant un corps qui comprend une paroi latérale au moins partiellement bordée à l'avant par une collerette d'appui sur la paroi.

L'invention trouve une application particulièrement avantageuse dans l'installation dans une cloison creuse d'un appareillage électrique tel que par exemple un interrupteur, un va-et-vient, un variateur électrique, une prise de courant, une prise réseau (RJ45), une prise de téléphone (RJ11), un voyant, ou encore un détecteur (de fumée, d'inondation, de température, de mouvement, de lumière ou de luminosité).

### ARRIERE-PLAN TECHNOLOGIQUE

Une boîte électrique pour cloison creuse comprend généralement une paroi latérale cylindrique ou parallélépipédique, fermée à l'arrière par une paroi de fond et bordée à l'avant par une collerette d'appui prévue pour prendre appui contre la face avant de la paroi frontale de la cloison creuse.

Une telle boîte électrique comporte en outre des moyens extérieurs d'accrochage à l'arrière de la paroi frontale de la cloison creuse, pour assurer une bonne tenue de la boîte dans la cloison.

Cette boîte électrique comporte aussi des moyens intérieurs d'assujettissement d'un appareillage électrique, ainsi que des trous dans sa paroi latérale ou dans sa paroi de fond, qui permettent de tirer des fils électriques à l'intérieur de la boîte électrique pour les connecter à l'appareillage électrique. Ces trous sont appelés « ouvertures d'entrée de gaine ».

Dans un souci d'isolation thermique des bâtiments, les boîtes électriques sont conçues de manière à réduire au mieux les passages d'air entre l'intérieur et l'avant de la cloison creuse.

Pour cela, il est connu de fermer les ouvertures d'entrée de gaine par des opercules perçables. De cette manière, les ouvertures d'entrée de gaine non utilisées restent obturées par ces opercules, tandis que celles utilisées sont percées à la taille correspondant au diamètre de la gaine.

On connaît par ailleurs du document US4296870 une boîte électrique équipée d'un capot.

Cette boîte électrique est parallélépipédique, avec un fond, une paroi latérale et des moyens d'assujettissement d'un mécanisme d'appareillage. Dans ce document, cette boîte est prévue pour être fixée à une structure en bois d'une cloison creuse.

Le capot présente quant à lui une partie arrière dont la forme parallélépipédique lui permet de s'engager autour de la boîte électrique. Il comporte également, à l'avant, une collerette évasée qui est reliée à la partie arrière par un soufflet. Cette collerette et ce soufflet sont prévus pour s'écraser contre la face arrière de la paroi frontale de la cloison creuse, lorsque cette dernière est rapportée sur la structure en bois.

L'inconvénient majeur de ce dispositif est qu'il doit être mis en place sur la structure en bois avant d'y rapporter la paroi frontale, ce qui va à l'encontre des habitudes des plaquistes et des électriciens.

On connaît également du document FR2863413 une boîte électrique comprenant une paroi latérale bordée à l'avant par une collerette d'appui, et des griffes de fixation adaptés à se fixer à une cloison creuse. Dans ce document, la collerette présente des orifices d'injection de colle. Il est prévu qu'un joint puisse être réalisé pour retenir la colle. Rien n'est en revanche prévu pour assurer une étanchéité à l'air.

### OBJET DE L'INVENTION

Les demanderesses ont constatés que malgré ces opercules, il arrive d'observer un manque d'étanchéité à l'air entre l'avant de la cloison creuse et l'intérieur de la cloison creuse. Elles ont découvert que ce manque d'étanchéité est majoritairement dû au fait que les ouvertures pratiquées dans les cloisons creuses par les installateurs présentent parfois des dimensions légèrement supérieures à celles de la boîte électrique, ce qui ouvre un passage à l'air entre le bord de la boîte et le bord de l'ouverture pratiquée dans la cloison creuse.

Afin de remédier à l'inconvénient précité de l'état de la technique, la présente invention propose une boîte telle que définie dans la revendication 1.

Ainsi, grâce à l'invention, ce joint périphérique permet de réduire voire de bloquer tout passage d'air entre la boîte et le bord de l'ouverture pratiquée dans la paroi.

Ce joint périphérique est fixé par surmoulage à la paroi latérale du corps. S'il est fixé à la face arrière de la collerette d'appui, il y sera en revanche nécessairement fixé par surmoulage.

La solution consistant à surmouler le joint périphérique sur le corps de la boîte permet de limiter le surcoût généré par l'ajout de ce joint et de rendre le joint imperdable.

Cette solution présente par ailleurs l'avantage de ne pas modifier pour l'installateur le processus d'installation de la boîte électrique dans la paroi.

Enfin, le surmoulage est une solution technique qui assure au joint périphérique une excellente fixation au corps de la boîte, ce qui peut s'avérer nécessaire eu égard aux efforts d'arrachement que ce joint subit lorsque l'installateur force la boîte électrique à s'engager dans une cavité de taille ajustée.

D'autres caractéristiques avantageuses et non limitatives de la boîte conforme à l'invention sont définies dans les revendications 2 et suivantes.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un premier mode de réalisation d'une boîte électrique selon l'invention ;
- la figure 2 est une vue schématique en perspective du corps de la boîte électrique de la figure 1 ;
- la figure 3 est une vue schématique en perspective de la partie surmoulée de la boîte électrique de la figure 1 ;
- les figures 4 et 5 sont des vues en coupe illustrant la mise en place de la boîte électrique de la figure 1 dans une paroi ;
- la figure 6 est une vue de détail de la zone VI de la figure 5 ;
- la figure 7 est une vue schématique de face d'une ouverture pratiquée dans une paroi ;
- la figure 8 est une vue schématique en perspective d'un second mode de réalisation de la boîte électrique selon l'invention ;
- la figure 9 est une vue schématique en perspective de la partie surmoulée de la boîte électrique de la figure 8 ;
- la figure 10 est une vue schématique de côté d'un troisième mode de réalisation de la boîte électrique selon l'invention ;
- la figure 11 est une vue en coupe de la boîte électrique de la figure 10, mise en place dans une paroi ;
- la figure 12 est une vue de détail de la zone XII de la figure 11 ;
- la figure 13 est une vue schématique en perspective éclatée d'un quatrième mode de réalisation de la boîte électrique selon l'invention ;
- la figure 14 est une vue schématique en perspective assemblée de la boîte électrique de la figure 13 ;
- la figure 15 est une vue en coupe selon le plan A-A de la figure 14 ;
- la figure 16 est une vue de détail de la zone XIX de la figure 15 ; et
- les figures 17 et 18 sont des vues homologues des figures 15 et 16, représentant une variante de réalisation de la boîte électrique.

En préliminaire on notera que les éléments identiques ou similaires des différentes variantes et des différents modes de réalisation de l'invention représentés sur les différentes figures seront, dans la mesure du possible, référencés par les mêmes signes de référence et ne seront pas décrits à chaque fois.

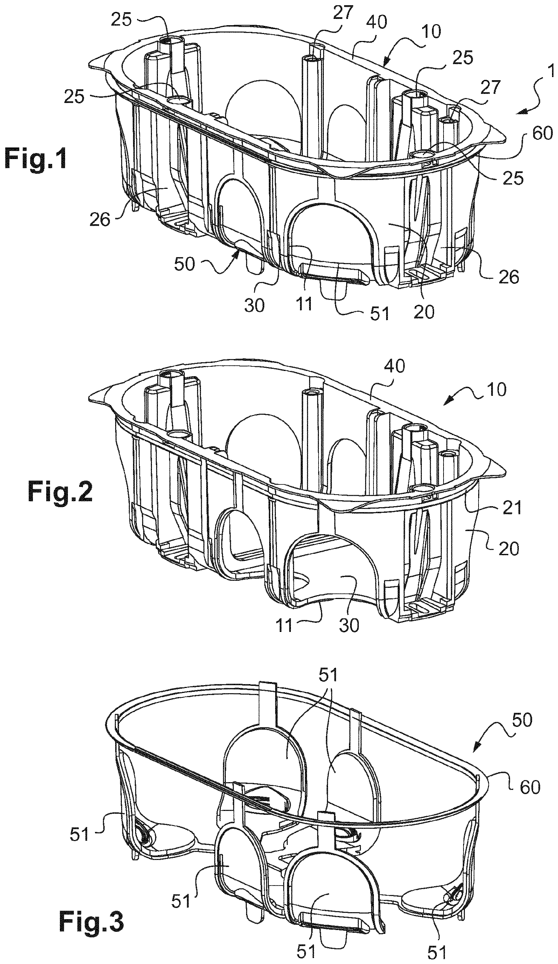

Sur les figures 1 à 6, 8 à 9, 10 à 12, et 13 à 16, on a représenté quatre modes de réalisation d'une boîte électrique 1 à rapporter sur une paroi.

En l'espèce, cette boîte électrique 1 est du type à encastrer dans une cavité pratiquée dans une paroi. Cette paroi est ici formée par une cloison creuse.

On rappelle à ce sujet que, de manière connue, une telle cloison creuse est généralement composée d'une ossature métallique (formée de montants verticaux et de rails horizontaux non représentés) et de panneaux de plâtre rapportés sur l'une au moins des deux faces de l'ossature métallique.

En variante, il pourrait s'agir d'une cloison creuse maçonnée.

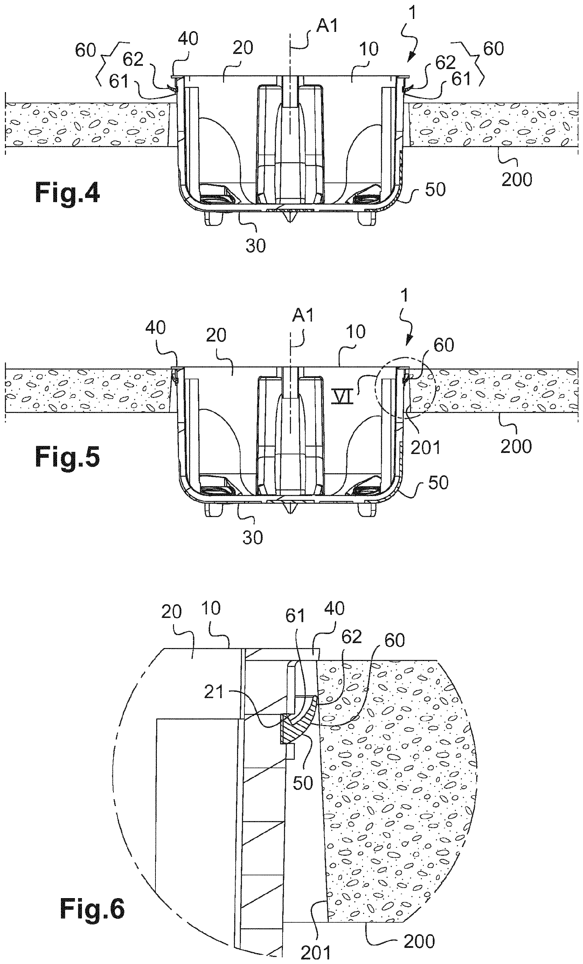

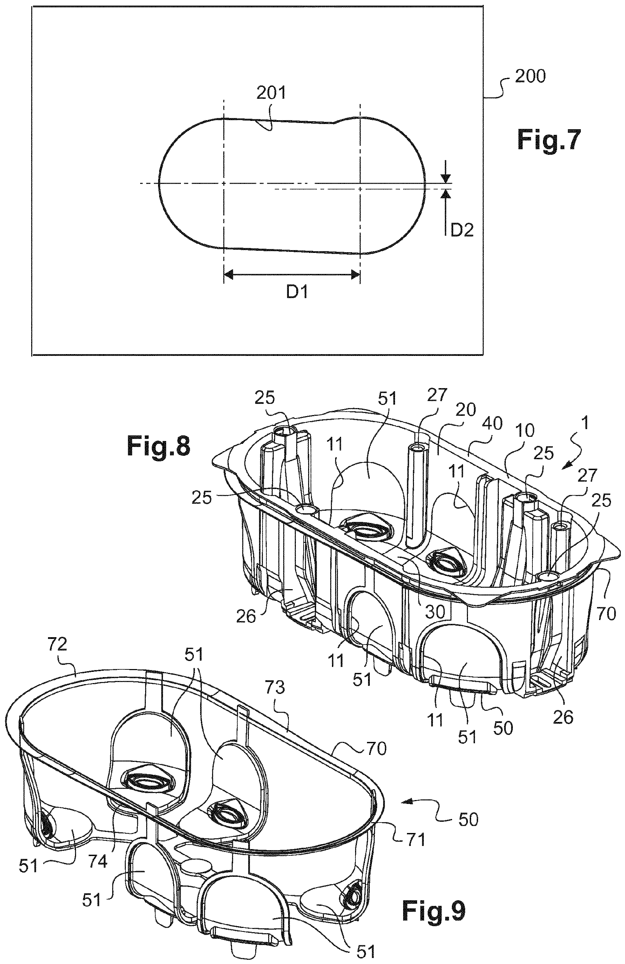

Ici, la cavité pratiquée dans la cloison creuse pour accueillir la boîte électrique 1 est simplement formée par une ouverture 201 réalisée à la scie cloche dans l'un des panneaux de plâtre 200 (voir par exemple les figures 5 et 7).

Dans la description, les termes « avant » et « arrière » seront utilisés par rapport à la direction du regard de l'installateur de la boîte électrique 1 dans le panneau de plâtre 200. Ainsi, les termes avant et arrière désigneront respectivement le lieu tourné vers l'extérieur de la cloison creuse et le lieu tourné vers l'intérieur de cette cloison creuse.

Dans tous les modes de réalisation représentés, la boîte électrique 1 comprend un corps 10 qui présente une forme générale cylindrique mais qui pourrait bien entendu présenter une forme différente, notamment parallélépipédique.

Dans les modes de réalisation représentés sur les figures 1 à 12, le corps 10 de la boîte électrique 1 présente plus précisément une section de forme oblongue, de manière à délimiter plusieurs postes d'accueil d'appareillages électriques (prise de courant, interrupteur, ...).

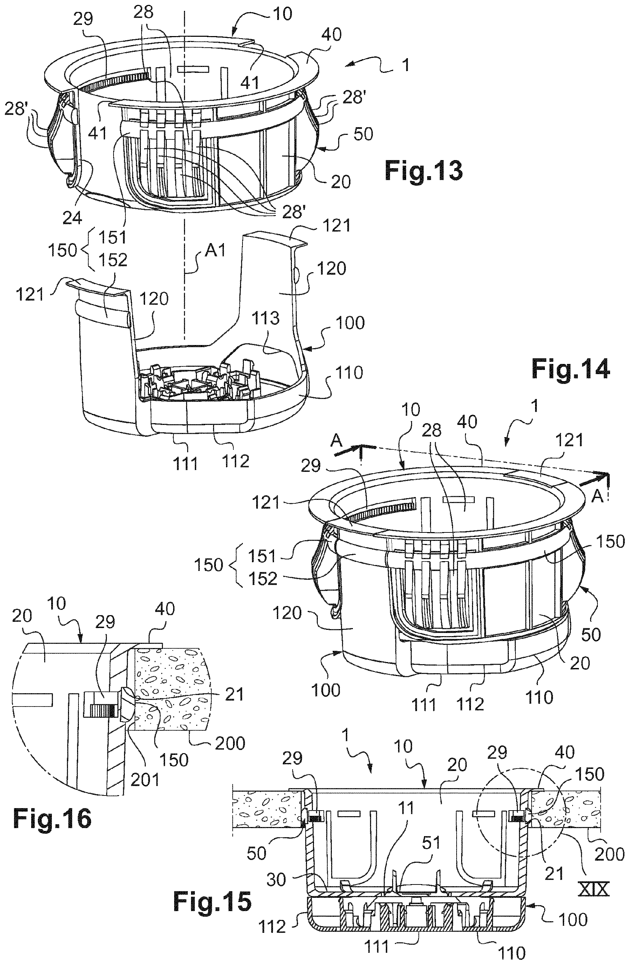

Dans les modes de réalisation représentés sur les figures 13 à 18, le corps 10 de la boîte électrique 1 présente une section de forme circulaire, de manière à délimiter un unique poste d'accueil d'un appareillage électrique.

Dans tous ces modes, le corps 10 de la boîte électrique 1 comporte une paroi latérale 20 qui est fermée à l'arrière par une paroi de fond 30 et qui est ouverte vers l'avant.

Pour sa fixation dans l'ouverture 201 pratiquée dans le panneau de plâtre 200, le corps 10 de la boîte électrique 1 comporte une collerette d'appui 40 qui longe extérieurement au moins une partie du bord de l'ouverture avant de la paroi latérale 20 et qui est adaptée à prendre appui contre la face avant du panneau de plâtre 200, autour de l'ouverture 201.

Cette collerette d'appui 40 peut se présenter sous diverses formes. Ainsi, comme le montrent par exemple les figures 1, 8 et 10, elle peut se présenter sous la forme d'un rebord longeant l'ensemble du pourtour de la paroi latérale 20 du corps 10 de la boîte électrique 1. En variante, comme le montre par exemple la figure 13, elle peut éventuellement être interrompue par des encoches 41. Encore en variante, elle peut se présenter sous la forme de plusieurs languettes réparties sur le pourtour de la paroi latérale de la boîte électrique.

Quelle que soit sa forme, cette collerette d'appui 40 permet de bloquer le corps 10 de la boîte électrique 1 vers l'arrière.

Pour bloquer le corps 10 de la boîte électrique 1 vers l'avant, cette boîte électrique 1 comporte des moyens d'accrochage à l'arrière du panneau de plâtre 200. Ces moyens d'accrochage sont adaptés à prendre en sandwich, en combinaison avec la collerette d'appui 40, le panneau de plâtre 200 pour y attacher fixement la boîte électrique 1.

Comme le montrent les figures 1 et 8, il peut s'agir de griffes (non représentées) qui interviennent sur la face externe de la paroi latérale 20 du corps 10, et qui, sous le contrôle de vis (non représentées) engagées dans des cheminées 25 prévues au travers de la paroi latérale 20 du corps 10, s'accrochent à la face arrière du panneau de plâtre 200. Des renfoncements 26 sont prévus dans la face externe de la paroi latérale 20 du corps 10 pour accueillir ces griffes et pour les guider entre une position arrière d'attente (dans laquelle elles ne gênent pas l'engagement de la boîte électrique 1 dans l'ouverture 201 pratiquée dans le panneau de plâtre 200), et une position avant déployée (dans laquelle elles s'accrochent à l'arrière du panneau de plâtre).

En variante, comme le montre la figure 14, il peut s'agir de volets 28 qui, lorsqu'un appareillage électrique est engagé dans la boîte, se déploient automatiquement vers l'extérieur afin de s'accrocher à l'arrière du panneau de plâtre. Ces volets 28 seront décrits plus en détail dans la suite de cet exposé.

La boîte électrique 1 comporte par ailleurs des moyens d'assujettissement d'appareillages électriques.

Comme le montrent les figures 1 et 8, il peut s'agir de puits de vissage 27 portés par la face interne de la paroi latérale 20 du corps 10 de la boîte électrique 1. Ces puits de vissage 27 permettent d'y visser des vis de fixation de support d'appareillage électrique.

En variante, comme le montrent les figures 13 et 14, il peut s'agir de fenêtres 29 prévues en creux dans la face interne de la paroi latérale 20 du corps 10 de la boîte électrique 1. Ces fenêtres 29 permettent de clipper un support d'appareillage électrique dans le corps 10 de la boîte électrique 1, comme cela sera décrit plus en détail dans la suite de cet exposé.

Pour permettre de tirer à l'intérieur de la boîte électrique 1 des conducteurs électriques d'amenée de courant, le corps 10 de la boîte électrique 1 présente au moins une ouverture de passage 11.

Comme le montrent les figures 1, 8 et 10, il peut être prévu plusieurs ouvertures de passage 11 qui s'étendent chacune à cheval sur la paroi latérale 20 et sur la paroi de fond 30 du corps 10 de la boîte électrique 1. Elles permettent d'y engager l'extrémité d'une gaine de cheminement à l'intérieur de laquelle courent des fils électriques.

En variante, comme le montre par exemple la figure 15, il peut être prévu une unique ouverture de passage 11, qui s'étend au centre de la paroi de fond 30 du corps 10 de la boîte électrique 1. Elle permet alors le passage de broches de connexion électrique, comme cela sera mieux décrit dans la suite de cet exposé.

Quoiqu'il en soit, dans tous les modes de réalisation, ces ouvertures de passage 11 sont initialement fermées par des opercules 51 détachables.

Selon une caractéristique particulièrement avantageuse de l'invention, la boîte électrique 1 comporte un joint périphérique 60 ; 70 ; 80 ; 150 ; 160 qui longe la collerette d'appui 40 tout autour de la boîte électrique 1 et qui est au moins en partie fixé à la paroi latérale 20 du corps 10.

On pourrait utiliser de la colle pour fixer le joint périphérique à la paroi latérale du corps 10. En variante, on pourrait simplement profiter de l'élasticité et du coefficient d'adhérence élevé du matériau du joint pour assurer son maintien sur la paroi latérale du corps.

Toutefois, comme cela sera décrit dans la suite de cet exposé, on préférera surmouler le joint périphérique 60 ; 70 ; 80 ; 150 ; 160 sur la face externe de la paroi latérale 20 du corps de la boîte électrique 1.Préférentiellement, le joint périphérique est placé de manière à suivre une trajectoire parallèle à celle de la collerette d'appui 40.

En pratique, le joint périphérique 60 ; 70 ; 80 est entièrement surmoulé sur le corps 10, excepté dans le cas où il est prévu de rapporter un composant (100 sur la figure 13) sur une partie du pourtour du corps, ce composant 100 portant alors une partie 152 du joint périphérique 150.

Typiquement, on peut prévoir que le corps 10 de la boîte électrique 1 soit formé d'une seule pièce par moulage d'une matière plastique rigide (typiquement en Polypropylène) et que le joint périphérique 60 ; 70 ; 80 ; 150 ; 160 soit surmoulé dans une matière plus souple et/ou plus compressible (typiquement en SEBS c'est-à-dire en «polystyrène-b-poly(éthylène-butylène)-b-polystyrène »).

Préférentiellement, le joint périphérique 60 ; 70 ; 80 ; 150 ; 160 est surmoulé sur le corps 10 de la boîte électrique au même moment que les opercules 51 qui ferment les ouvertures de passage 11, dans là même matière.

Préférentiellement, le corps 10 de la boîte électrique 1 présente sur sa face externe une gorge périphérique 21 (voir figue 2), qui s'étend sur au moins une majeure partie du pourtour du corps 10 et dans laquelle est surmoulée au moins une partie du joint périphérique 60 ; 70 ; 80 ; 150.

Sur les figures 1 à 6, on a représenté un premier mode de réalisation de la boîte électrique 1 conforme à l'invention.

Dans ce mode de réalisation, la collerette d'appui 40 borde le côté avant de la paroi latérale 20 du corps 10 sur l'ensemble de son pourtour. Il est prévu quatre puits de vissage 27 qui permettent de fixer dans la boîte électrique 1 deux appareillages électriques côte-à-côte. Il est par ailleurs prévu six ouvertures de passage 11, chacune fermée par un opercule 51. Le joint périphérique 60 est quant à lui surmoulé sur la face externe de la paroi latérale 20 du corps 10.

Sur la figure 2 n'apparaît que le corps 10 de la boîte électrique 1. On y observe que la gorge périphérique 21 s'étend tout le long de la collerette d'appui 40. Elle s'étend à une distance de la collerette d'appui 40 qui est comprise entre 0 et 26 millimètres (ce qui correspond à l'épaisseur maximale d'un panneau de plâtre). La gorge périphérique 21 s'étend plus précisément à une distance de cette collerette d'appui 40 qui est comprise entre 1 et 9 millimètres (ce qui est inférieur à l'épaisseur minimale d'un panneau de plâtre). Elle s'étend ici à 4 millimètres de celle-ci. De cette manière, quelle que soit l'épaisseur du panneau de plâtre 200, le joint périphérique 60 vient se placer dans l'ouverture 201 pratiquée dans ce panneau de plâtre 200, et il ne ressort pas à l'arrière du panneau de plâtre.

Sur la figure 3, on a représenté la partie surmoulée 50 de la boîte électrique 1. On y observe, d'une part, les opercules 51, et, d'autre part, le joint périphérique 60. On observe également que ces différents éléments 51, 60 sont reliés les uns aux autres par des bandes qui sont nécessaires pour assurer le surmoulage complet de la partie surmoulée 50 sur le corps 10.

Comme le montre cette figure 3, le joint périphérique 60 présente un contour fermé, de manière qu'il s'étend sur l'ensemble du pourtour de la paroi latérale 20 du corps 10 (voir figure 1).

Comme le montre bien la figure 6, la gorge périphérique 21 prévue en creux dans la face externe de la paroi latérale 20 du corps 10 présente une section transversale rectangulaire, ouverte vers l'extérieur.

Le joint périphérique 60 comporte pour sa part une embase 61 qui est surmoulée sur le fond et sur les côtés de la gorge périphérique 21, afin de lui assurer une bonne fixation au corps 10. Le joint périphérique 60 comporte également une lèvre 62 qui s'étend à partir de l'embase 61 et qui émerge de la gorge périphérique 21, en saillie de la paroi latérale 20 du corps 10.

Cette lèvre 62 s'élève en saillie de la paroi latérale 20 du corps 10 sur une hauteur comprise entre 1 et 10 millimètres, cette hauteur étant toutefois préférentiellement choisie entre 3 et 7 millimètres.

Comme le montre la figure 4, au repos (c'est-à-dire avant l'engagement de la boîte électrique 1 dans l'ouverture 201 pratiquée dans le panneau de plâtre 200), la lèvre 62 s'étend à partir de l'embase 61 dans une direction radiale par rapport à l'axe central A1 de la boîte électrique 1, puis elle est légèrement recourbée (à environ 30 degrés) vers l'avant de la boîte électrique 1. Cette courbure lui permet, lorsque la boîte électrique 1 est engagée dans l'ouverture 201 (voir figure 5), de se courber naturellement vers l'avant sans opposer d'effort trop important à cet engagement.

Elle permet alors avantageusement de s'opposer à l'extraction de la boîte électrique hors de l'ouverture 201. Elle permet surtout d'assurer une bonne étanchéité à l'air tout autour du corps 10.

L'installation de la boîte électrique 1 dans le panneau de plâtre 200 est alors réalisée de la manière suivante.

L'installateur commence par percer une ouverture 201 oblongue dans le panneau de plâtre 200.

Pour cela, il utilise une scie cloche de diamètre adapté (typiquement de 68 millimètres de diamètre) pour percer deux ouvertures circulaires séparées l'une de l'autre d'un entraxe adapté (typiquement de 71 millimètres). Il utilise ensuite une scie pour relier les bords de ces deux ouvertures circulaires afin de former l'ouverture 201 oblongue.

L'installateur tire ensuite au moins une gaine de cheminement de câbles au travers de cette ouverture 201. Il engage ensuite l'extrémité libre de cette gaine dans la boîte électrique 1, au travers de l'une des ouvertures de passage 11 (dont l'opercule 51 aura été préalablement détaché).

Il rapporte ensuite la boîte électrique 1 dans l'ouverture 201 pratiquée dans le panneau de plâtre 200 (voir figure 4), en prenant soin que la collerette d'appui 40 s'applique bien contre le panneau de plâtre 100 (voir figure 5). Lors de cet engagement, le joint périphérique 60 se déforme de telle manière qu'il s'applique contre tout le pourtour de l'ouverture 201, ce qui interdit tout passage d'air entre l'avant et l'arrière du panneau de plâtre 200.

L'installateur manoeuvre ensuite les vis de manière que les griffes (non représentées) viennent s'accrocher à la face arrière du panneau de plâtre 200, ce qui assure une bonne fixation de la boîte électrique 1.

Cette dernière est alors prête à accueillir deux appareillages électriques.

Dans le procédé d'installation précité, on a considéré que l'ouverture 201 pratiquée dans le panneau de plâtre 200 présentait une forme oblongue parfaite, permettant au joint périphérique 60 d'épouser parfaitement la forme de l'ouverture 201 afin d'assurer l'étanchéité entre l'avant et l'arrière du panneau de plâtre 200.

En pratique, comme le montre la figure 7, il arrive que l'installateur découpe dans le panneau de plâtre 200 une ouverture 201 de forme imparfaite.

Il se peut en effet qu'il perce les deux ouvertures circulaires avec un entraxe D1 trop important. Il se peut également qu'il découpe les deux ouvertures circulaires avec un décalage en hauteur D2, ce qui nécessite une reprise de la découpe de manière à pouvoir placer la boîte électrique 1 à l'horizontal.

Le résultat de ces erreurs de découpe est que l'ouverture 201 présente une taille plus importante que prévue, ce qui génère alors un écart entre le bord de la paroi latérale 20 du corps 10 de la boîte électrique 1 et le bord de l'ouverture 201. En plaçant convenablement la boîte électrique 1 représentée sur la figure 1 dans l'ouverture 201, on constate que cet écart est admissible à une extrémité de la boîte électrique 1, mais qu'il est trop important à l'autre extrémité de la boîte électrique 1 pour permettre au joint périphérique 60 d'assurer correctement sa fonction.

Sur les figures 8 et 9, on a représenté un second mode de réalisation de la boîte électrique 1 conforme à l'invention, permettant de compenser ces erreurs de découpe.

Dans ce mode de réalisation, le corps 10 de la boîte électrique 1 est identique au corps de la boîte électrique représenté sur la figure 2.

Le joint périphérique 70 diffère en revanche de celui représenté sur la figure 3.

Ce joint périphérique 70 est ici encore surmoulé sur la face externe de la paroi latérale 20 du corps 10, à l'intérieur de la gorge périphérique 21, de telle manière qu'il s'étend sur l'ensemble du pourtour de la paroi latérale 20 du corps 10 (voir figure 8).

Comme le montre bien la figure 9, le joint périphérique 70 présente en revanche une largeur variable. Ainsi, la lèvre du joint périphérique 70 présente une hauteur (mesurée en partant de la face externe de la paroi latérale 20 du corps 10, jusqu'à l'extrémité de la lèvre) qui varie continument dans au moins une zone du pourtour de la paroi latérale 20.

Le joint périphérique 70 présentant un contour de forme oblongue, il comporte deux parties d'extrémité 71, 72 aux contours semi-circulaires, et deux parties intermédiaires 73, 74 rectilignes et sensiblement parallèles.

Sur ses deux parties d'extrémité 71, 72, le joint périphérique 70 présente une hauteur constante, cette hauteur étant supérieure sur la seconde partie d'extrémité 72.

Sur ses deux parties intermédiaires 73, 74, le joint périphérique 70 présente une hauteur qui augmente continument depuis la première partie d'extrémité 71 vers la seconde partie d'extrémité 72.

La forme du joint périphérique 70 permet ainsi de rattraper d'éventuelles erreurs de découpe commises par l'installateur.

Ici encore, au repos, la lèvre du joint périphérique 70 est légèrement recourbée vers l'avant de la boîte électrique 1. Cette courbure lui permet, lorsque la boîte électrique 1 est engagée dans une ouverture 201 au contour parfait (c'est-à-dire découpée sans erreur), de se courber fortement et automatiquement vers l'avant, sans opposer d'effort trop important à cet engagement.

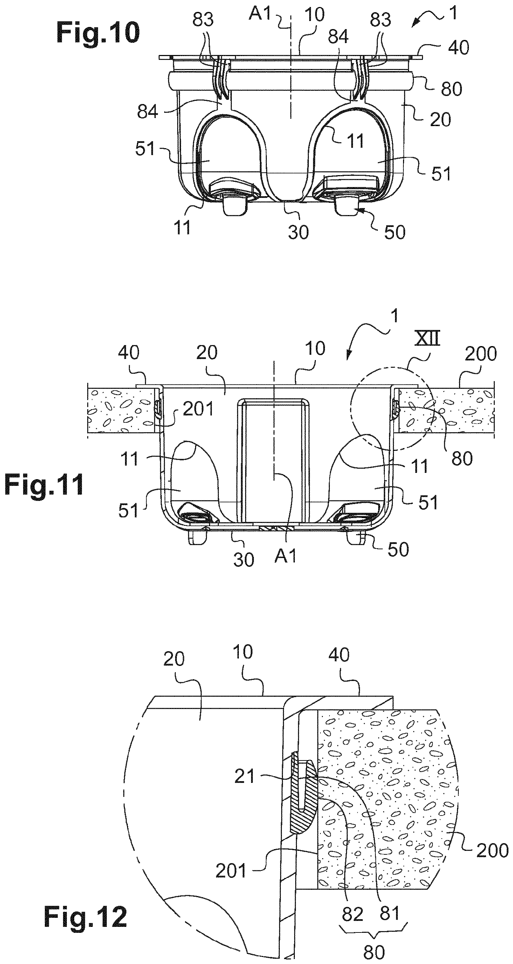

Sur les figures 10 à 12, on a représenté un troisième mode de réalisation de la boîte électrique 1 conforme à l'invention.

Dans ce mode de réalisation, le corps 10 de la boîte électrique 1 est quasi identique au corps de la boîte électrique représenté sur la figure 2. Il ne diffère de celui-ci que par la largeur de la gorge périphérique 21 qui, comme le montre la figure 12, est ici plus importante.

Ainsi, cette gorge périphérique 21 présente une largeur de 4 millimètres et une profondeur de quelques dixièmes de millimètre. Elle s'étend le long de la collerette d'appui 40, à une distance constante de celle-ci égale à 5 millimètres.

Le joint périphérique 80 qui est surmoulé dans cette gorge périphérique 21 diffère sensiblement de celui représenté sur la figure 3.

Comme le montre la figure 10, ce joint périphérique 80 forme en effet un bourrelet qui s'étend en saillie de la paroi latérale 20 du corps 10 de la boîte électrique 1, sur tout le pourtour de celle-ci.

Ce bourrelet pourrait être plein. Toutefois, ici, comme le montre la figure 12, il est creusé par une rigole qui débouche vers l'avant. De cette manière, le joint périphérique 80 comporte une embase 81 surmoulée dans la gorge périphérique 21, et une lèvre 82 recourbée vers l'avant, dans une direction parallèle à l'axe central A1 de la boîte électrique 1.

La forme de ce joint périphérique 80 lui permet de s'écraser afin de parfaitement épouser la forme du bord de l'ouverture 201 pratiquée dans le panneau de plâtre 200 (voir figure 11).

Sur la figure 10, on observe que la partie surmoulée 50 comporte sur le joint périphérique 80, au niveau de chaque bande 84 qui fait la jonction entre ce joint et les opercules 51, deux nervures radiales 83 qui s'étendent parallèlement à l'axe centrale A1 de la boîte électrique 1. Ces nervures radiales 83 assurent un blocage en rotation de la boite électrique 1 dans l'ouverture 201 pratiquée dans le panneau de plâtre 200.

Sur les figures 13 à 16, on a représenté un quatrième mode de réalisation de la boîte électrique 1 conforme à l'invention.

Dans ce mode de réalisation, la boîte électrique 1 se présente en deux parties distinctes. Elle comporte en effet, outre le corps 10, un étrier 100 prévu pour être rapporté à l'arrière du corps 10 et pour faciliter la connexion électrique de l'appareillage électrique logé dans le corps 10.

Le corps 10 de la boîte électrique 1 présente alors une forme différente de celle du corps représenté sur la figure 2.

Il présente ici une forme globalement cylindrique de révolution autour de l'axe central A1.

Pour assurer sa fixation dans l'ouverture 201 pratiquée dans le panneau de plâtre 200, le corps 10 comporte ici quatre volets 28 rectangulaires qui sont découpés dans sa paroi latérale 20 et qui sont répartis autour de l'axe central A1. Chaque volet 28 présente trois bords libres et un quatrième bord, à savoir ici le bord avant, qui se raccorde au reste de la paroi latérale 20 par deux pattes formant charnière. Les volets 28 sont ainsi libres de pivoter au travers de la paroi latérale 20.

Au repos, les volets 28 sont positionnés de telle sorte que leurs faces externes sont situées dans le prolongement de la face externe du reste de la paroi latérale 20 du corps 10 de la boîte électrique 1.

Ici, comme le montre bien la figure 13, la collerette d'appui 40 borde le côté avant de la paroi latérale 20 du corps 10 sur une partie seulement du pourtour de celui-ci. Elle est en effet interrompue par deux encoches 41 diamétralement opposées.

La partie surmoulée 50 en SEBS recouvre presque l'ensemble du pourtour de la paroi latérale 20 du corps 10 de la boîte électrique 1. Elle est seulement interrompue dans le prolongement des encoches 41, de manière à délimiter deux passages 24 d'axes parallèles à l'axe A1. Elle recouvre donc notamment les faces externes des volets 28.

La partie surmoulée 50 présente ici, au niveau de chacun de ces volets 28, des nervures 28' radiales qui s'élèvent en saillie de la face externe de ces volets 28.

De cette manière, lorsque le corps 10 de la boîte électrique 1 est engagé dans l'ouverture 201, ces nervures 28' forcent les volets 28 à pivoter vers l'intérieur du corps 10. Puis, lorsqu'un appareillage électrique de forme adaptée est engagé dans le corps 10, il va forcer les volets 28 à pivoter vers l'extérieur, de telle sorte que les nervures 28' se déforment contre le bord de l'ouverture 201 et s'accrochent à la face arrière du panneau de plâtre 200.

Pour assujettir cet appareillage électrique dans le corps 10, il est prévu deux fenêtres 29 permettant d'y encliqueter des pattes d'encliquetage de l'appareillage électrique.

Ces deux fenêtres 29 présentent des formes rectangulaires, et sont situées de manière diamétralement opposée par rapport à l'axe central A1. Elles s'étendent en longueur le long du bord avant de la paroi latérale 20 du corps 10, à distance de celui-ci. Elles pourraient être traversantes et déboucher à l'extérieur de la paroi latérale 20 du corps 10. Elles sont toutefois ici prévues en creux dans la face interne de la paroi latérale 20. Leurs fonds sont crantés, de manière à permettre de bloquer en rotation l'appareillage électrique par rapport au corps 10 autour de l'axe central A1.

Comme le montre bien la figure 13, l'étrier 100 comporte un socle 110 à partir duquel s'élèvent deux bras 120 dont les extrémités libres présentent des moyens d'accrochage 121 au panneau de plâtre 200.

L'étrier comporte également des éléments de connexion (non visibles sur les figures), qui sont fixés au socle 110 et qui comprennent chacun une borne d'entrée pour la connexion d'un fil électrique issu du réseau électrique local, et une borne de sortie accessible par l'avant du socle 110 pour la connexion de l'appareillage électrique logé dans le corps 10 de la boîte électrique 1.

Plus précisément, le socle 110 de l'étrier 100 est prévu pour se placer à l'arrière de la paroi de fond 30 du corps 10, de manière à former avec celui-ci un double-fond.

Ce socle 110 comporte ici une paroi de fond 111 plane et circulaire, qui est bordée à l'avant par un rebord périphérique 112 adapté à venir en appui contre le corps 10.

Les deux bras 120 permettent de positionner l'étrier 100 sur le panneau de plâtre 200, avant de rapporter le corps 10 dans l'ouverture 201. Les deux bras 120 s'étendent sur des longueurs telles qu'une fois accrochés au panneau de plâtre 200, ils maintiennent le socle 110 à l'arrière et à distance de ce panneau de plâtre 200.

Ces deux bras 120 s'étendent à partir de la tranche avant du rebord périphérique 112 du socle 110, dans le prolongement de ce rebord périphérique 112, dans des directions parallèles, en position diamétralement opposée.

Les extrémités libres de ces deux bras 120 sont recourbées vers l'extérieur, de manière à former des rebords 121 qui sont ainsi adaptés à s'appuyer contre la face avant du panneau de plâtre 200.

Comme le montre la figure 13, les passages 24 prévus sur la face externe de la paroi latérale 20 sont prévus pour permettre d'y engager les deux bras 120 de l'étrier 100. Les encoches 41 prévues dans la collerette d'appui 40 sont quant à elles prévues pour permettre d'y engager les rebords 121 des deux bras 120.

Comme le montre la figure 13, le socle 110 présente une ouverture d'entrée 113 pour les fils électriques, qui est située dans le rebord périphérique 112 du socle 110, dans le prolongement de l'un des deux bras 120. Elle présente une forme oblongue qui lui permet de recevoir l'extrémité d'un embout pour gaine de cheminement de câble (non représenté).

Les éléments de connexion de phase, de neutre et de terre (non représentés) sont ici fixés dans des logements isolés, délimités par des cloisons s'élevant à partir de la face avant du fond 111 du socle 110 de l'étrier 100.

Comme le montre la figure 15, pour permettre à trois broches de l'appareillage électrique de se connecter à ces trois éléments de connexion, la paroi de fond 30 du corps 10 de la boîte électrique 1 présente une ouverture de passage 11 en position centrale, au travers de laquelle ces broches peuvent s'engager. Cette ouverture de passage 11 est initialement fermée par l'opercule 51 détachable.

Dans ce mode de réalisation de la boîte électrique 1, le joint périphérique 150 est en partie seulement surmoulé sur la face externe de la paroi latérale 20 du corps 10.

Ce joint périphérique 150 présente ainsi une partie 151 surmoulée sur la face externe de la paroi latérale 20 du corps 10, et une partie 152 surmoulée sur les faces externes des bras 120 de l'étrier 100.

Plus précisément, comme le montrent les figures 15 et 16, la paroi latérale 20 présente, en creux dans sa face externe, une gorge périphérique 21 qui longe la collerette d'appui 40, à distance de celle-ci.

Cette gorge périphérique 21 est interrompue au niveau des deux passages 24 pour les bras 120 de l'étrier 100.

La partie 151 du joint périphérique 150 qui est surmoulée dans cette gorge périphérique 21 forme un bourrelet plein, qui présente une épaisseur de 2 millimètres afin de faire saillie de la face externe de la paroi latérale 20 du corps 10.

Chaque bras 120 présente également, en creux dans sa face externe, une gorge qui longe le rebord 121, à distance de celui-ci.

La partie 151 du joint périphérique 150 qui est surmoulée dans cette gorge présente également une forme de bourrelet de section identique à celle de la première partie 151 du joint périphérique 150. Elle s'étend par ailleurs sur toute la largeur du bras 120, à une hauteur telle que lorsque le socle 110 de l'étrier 100 est rapporté à l'arrière du corps 10, cette seconde partie 152 se place dans le prolongement de la première partie 151 du joint périphérique 150 (voir figure 14).

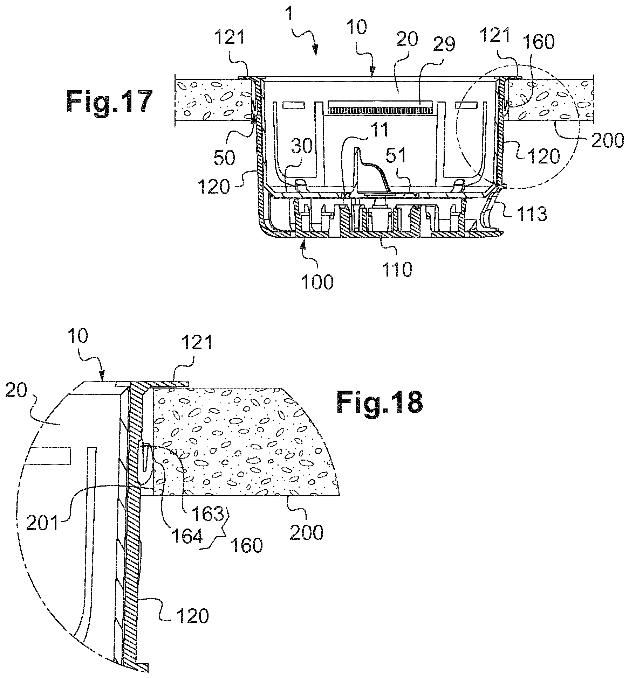

Sur les figures 17 et 18, on a représenté une variante de réalisation de la boîte électrique 1 représentée sur les figures 13 à 16.

Dans cette variante, le corps 10 de la boîte électrique 1 est identique au corps de la boîte électrique représenté sur la figure 13.

On observe en revanche sur ces figures que le joint périphérique 160 est creusé par une rigole qui débouche vers l'avant. De cette manière, les deux parties du joint périphérique 160 comportent chacun une embase 163 surmoulée sur l'étrier 100 ou sur le corps 10, et une lèvre 164 recourbée vers l'avant, dans une direction parallèle à l'axe central A1 de la boîte électrique 1.

## Revendications

1. Boîte électrique (1) à encastrer dans une paroi (200), comportant :
- un corps (10) qui comprend une paroi latérale (20) et une collerette d'appui (40) qui borde au moins partiellement la paroi latérale (20) et qui est adaptée à prendre appui sur l'avant de la paroi (200), et
- des moyens d'accrochage à l'arrière de la paroi (200) qui sont adaptés à fixer, en combinaison avec la collerette d'appui (40), le corps (10) dans la paroi (200),
**caractérisée en ce qu'**elle comporte un joint périphérique (60 ; 70 ; 80 ;150 ; 160) qui-:
- longe la collerette d'appui (40) tout autour du corps (10),
- est au moins en partie fixé à la paroi latérale (20) du corps (10),
- est surmoulé sur une face externe de la paroi latérale (20), et
- s'étend à une distance de la collerette d'appui (40) qui est comprise entre 0 et 26 millimètres et qui est préférentiellement comprise entre 1 et 9 millimètres.

2. Boîte électrique (1) selon la revendication précédente, dans laquelle le corps (10) présente des ouvertures de passage (11) pour des gaines électriques, obturées par des opercules (51) qui viennent de formation d'une seule pièce avec le joint périphérique (60 ; 70 ; 80 ; 150).

3. Boîte électrique (1) selon l'une des revendications précédentes, dans laquelle le corps (10) présente une gorge périphérique (21) en creux, qui s'étend sur au moins une majeure partie du pourtour du corps (10) et dans laquelle est surmoulé le joint périphérique (60 ; 70 ; 80 ; 150).

4. Boîte électrique (1) selon l'une des revendications précédentes, dans laquelle le joint périphérique (60 ; 70 ; 80) présente une lèvre en saillie de la paroi latérale du corps.

5. Boîte électrique (1) selon l'une des revendications précédentes, dans laquelle le joint périphérique (70) présente une hauteur en saillie de la paroi latérale (20) du corps (10) qui varie continument dans au moins une zone du pourtour de la paroi latérale (20).

6. Boîte électrique (1) selon l'une des revendications 1 à 5, dans laquelle le joint périphérique (60 ; 70 ; 80) est entièrement surmoulé sur le corps (10).

7. Boîte électrique (1) selon l'une des revendications 1 à 5, dans laquelle :
- il est prévu un étrier de connexion (100) comportant, d'une part, un socle (110) à rapporter à l'arrière du corps (10), qui délimite une ouverture d'entrée (113) pour conducteurs électriques, et qui comprend au moins une borne de connexion électrique, et, d'autre part, au moins deux bras (120) distincts qui s'étendent à partir du socle (110), vers l'avant, et dont les extrémités libres présentent des moyens d'accrochage (121) à la paroi (200), et
- la collerette d'appui (40) du corps (10) présente au moins une interruption (41) sur le pourtour de la paroi latérale (20) du corps (10), pour le passage des extrémités libres des bras (120) de l'étrier de connexion (100).

8. Boîte électrique (1) selon la revendication 7, dans laquelle le joint périphérique (150) présente une partie (151) surmoulée sur le corps (10) et une partie (152) surmoulée sur chaque bras (120) de telle sorte que, lorsque le socle (110) de l'étrier de connexion (100) est rapporté à l'arrière du corps (10), les deux parties (151 ; 152) du joint périphérique (150) se placent dans le prolongement l'une de l'autre.

9. Boîte électrique (1) selon l'une des revendications précédentes, dans laquelle le corps (10) est moulé d'une seule pièce en matière plastique plus rigide que le joint périphérique (60 ; 70 ; 80 ; 150).

## Patentansprüche

1. Elektrische Dose (1) zum Einbau in eine Wand (200) mit
- einem Körper (10), der eine Seitenwand (20) und einen Stützrand (40), der die Seitenwand (20) wenigstens teilweise umrandet und der dazu ausgelegt ist, auf der Vorderseite der Wand (200) aufzuliegen, aufweist, und
- Mitteln zum Befestigen an der Rückseite der Wand (200), die dazu ausgelegt sind, den Körper (10) zusammen mit dem Stützrand (40) in der Wand (200) zu befestigen,
**dadurch gekennzeichnet, daß** sie eine umlaufende Dichtung (60; 70; 80; 150; 160) aufweist, die
- am Stützrand (40) entlang um den gesamten Körper (10) herum geführt ist,
- wenigstens teilweise an der Seitenwand (20) des Körpers (10) befestigt ist,
- an eine Außenseite der Seitenwand (20) angeformt ist und
- sich in einem Abstand vom Stützrand (40) erstreckt, der zwischen 0 und 26 mm beträgt und der vorzugsweise zwischen 1 und 9 mm beträgt.

2. Elektrische Dose (1) gemäß dem vorangehenden Anspruch, bei der der Körper (10) Durchlässe (11) für Kabelschläuche aufweist, die durch Deckel (51) verschlossen sind, die mit der umlaufenden Dichtung (60; 70; 80; 150) einstückig gefertigt worden sind.

3. Elektrische Dose (1) gemäß einem der vorangehenden Ansprüche, bei der der Körper (10) eine umlaufende Hohlkehle (21) aufweist, die sich wenigstens über den größten Teil des Umfangs des Körpers (10) erstreckt und in der die umlaufende Dichtung (60; 70; 80; 150) angeformt ist.

4. Elektrische Dose (1) gemäß einem der vorangehenden Ansprüche, bei der die umlaufende Dichtung (60; 70; 80; 150) eine von der Seitenwand des Körpers abstehende Lippe aufweist.

5. Elektrische Dose (1) gemäß einem der vorangehenden Ansprüche, bei der sich die umlaufende Dichtung (70) über der Seitenwand (20) des Körpers (10) mit einer Höhe erhebt, die wenigstens in einem Bereich des Umfangs der Seitenwand (20) kontinuierlich variiert.

6. Elektrische Dose (1) gemäß einem der Ansprüche 1 bis 5, bei der die umlaufende Dichtung (60; 70; 80) vollständig an den Körper (10) angeformt ist.

7. Elektrische Dose (1) gemäß einem der Ansprüche 1 bis 5, bei der
- ein Verbindungsbügel (100) vorgesehen ist, der einerseits einen an der Rückseite des Körpers (10) anzubringenden Sockel (110), der eine Eingangsöffnung (113) für elektrische Leiter umgrenzt und der wenigstens einen elektrischen Verbindungsstift aufweist, und andererseits wenigstens zwei getrennte Arme (120), die sich vom Sockel (110) aus nach vorne erstrecken und deren freie Enden Mittel (121) zum Befestigen an der Wand (200) aufweisen, aufweist, und
- der Stützrand (40) des Körpers (10) am Umfang der Seitenwand (20) des Körpers (10) wenigstens eine Unterbrechung (41) zum Durchlassen der freien Enden der Arme (120) des Verbindungsbügels (100) aufweist.

8. Elektrische Dose (1) gemäß Anspruch 7, bei der die umlaufende Dichtung (150) einen an den Körper (10) angeformten Teil (151) und einen an jeden Arm (120) angeformten Teil (152) derart aufweist, daß, wenn der Sockel (110) des Verbindungsbügels (100) an der Rückseite des Körpers (10) angebracht ist, die beiden Teile (151, 152) der umlaufenden Dichtung (150) in gegenseitiger Verlängerung angeordnet sind.

9. Elektrische Dose (1) gemäß einem der vorangehenden Ansprüche, bei der der Körper (10) einstückig aus einem Plastikmaterial geformt ist, das steifer als die umlaufende Dichtung (60; 70; 80; 150) ist.

## Claims

1. An electrical box (1) for flush mounting in a wall (200), the electrical box comprising:
• a body (10) that comprises a side wall (20) and a bearing collar (40) that borders the side wall (20), at least in part, and that is adapted to bear against the front of the wall (200); and
• catch means for engaging the rear of the wall (200), which catch means are adapted to co-operate with the bearing collar (40) to fasten the body (10) in the wall (200);
the electrical box being **characterized in that** it also includes a peripheral gasket (60; 70; 80; 150; 160) that:
• runs beside the bearing collar (40) all around the body (10);
• is fastened, at least in part, to the side wall (20) of the body (10);
• is overmolded on an outside face of the side wall (20); and
• extends at a distance from the bearing collar (40) that lies in the range 0 to 26 mm, and that preferably lies in the range 1 mm to 9 mm.

2. An electrical box (1) according to the preceding claim, wherein the body (10) presents through openings (11) for electrical conduits, closed by membranes (51) that are formed integrally with the peripheral gasket (60; 70; 80; 150).

3. An electrical box (1) according to any preceding claim, wherein the body (10) presents a setback peripheral groove (21) that extends over at least a major fraction of the periphery of the body (10) and into which the peripheral gasket (60; 70; 80; 150) is overmolded.

4. An electrical box (1) according to any preceding claim, wherein the peripheral gasket (60; 70; 80) presents a lip that projects from the side wall of the body.

5. An electrical box (1) according to any preceding claim, wherein the peripheral gasket (70) presents a height out of the side wall (20) of the body (10) that varies continuously in at least one zone of the periphery of the side wall (20).

6. An electrical box (1) according to any one of claims 1 to 5, wherein the peripheral gasket (60; 70; 80) is entirely overmolded on the body (10).

7. An electrical box (1) according to any one of claims 1 to 5, wherein:
• a connection bracket (100) is provided comprising firstly a base (110) for fitting to the rear of the body (10), which base defines an inlet opening (113) for electrical conductors, and includes at least one electrical connection terminal, and secondly at least two distinct arms (120) that extend from the base (110), towards the front, with free ends that present catch means (121) for engaging the wall (200); and
• the bearing collar (40) of the body (10) presents at least one interruption (41) in the periphery of the side wall (20) of the body (10), for passing the free ends of the arms (120) of the connection bracket (100).

8. An electrical box (1) according to claim 7, wherein the peripheral gasket (150) presents a portion (151) that is overmolded on the body (10), and a portion (152) that is overmolded on each arm (120), such that, when the base (110) of the connection bracket (100) is fitted to the rear of the body (10), the two portions (151; 152) of the peripheral gasket (150) extend each other.

9. An electrical box (1) according to any preceding claim, wherein the body (10) is molded as a single piece out of a plastics material that is more rigid than the peripheral gasket (60; 70; 80; 150).
